# EUROPÄISCHE PATENTSCHRIFT

(11) **EP 2 939 403 B1**
(45) Veröffentlichungstag und Bekanntmachung des Hinweises auf die Patenterteilung: **26.02.2020**
(21) Anmeldenummer: 13815779.7
(22) Anmeldetag: 27.12.2013
(51) Int. Cl.: H04M 1/725

(54) **EIN-/AUSGABEGERÄT SOWIE KOMMUNIKATIONSSYSTEM**
I/O DEVICE AND COMMUNICATION SYSTEM
APPAREIL D'ENTRÉE/DE SORTIE AINSI QUE SYSTÈME DE COMMUNICATION

(30) Priorität: 27.12.2012 DE 102012113116
(43) Veröffentlichungstag der Anmeldung: 04.11.2015
(73) Patentinhaber: Bernitz, Georg, 90441 Nürnberg (DE)
(72) Erfinder: Bernitz, Georg, 90441 Nürnberg (DE)
(74) Vertreter: Bergmeier, Werner
(86) Internationale Anmeldenummer: PCT/EP2013/078058
(87) Internationale Veröffentlichungsnummer: WO 2014/102329

(56) Entgegenhaltungen:
- EP-A2- 0 889 402
- US-A1- 2008 307 096
- US-A1- 2011 213 855
- US-B1- 7 775 884

## Beschreibung

Die vorliegende Erfindung betrifft ein Ein-/Ausgabegerät sowie ein Kommunikationssystem mit einem derartigen Ein-/Ausgabegerät.

Allgemein bekannte mobile Kommunikationsgeräte, wie bspw. Mobiltelefone, insbesondere Smartphones, müssen immer leistungsstärker werden, um den Kundenerwartungen gerecht zu werden. Hierfür benötigen diese immer leistungsstärkere Rechen-/Steuereinheiten sowie Speichereinheiten. Gerade im mobilen Anwendungsbereich sind jedoch hier Grenzen gesetzt, da das Kommunikationsgerät zum mobilen Gebrauch immer noch leicht genug und handlich ausgebildet sein muss. Infolgedessen können Mobiltelefone nur bis zu einem begrenzten Maß mit leistungsstärkeren Rechen-/Steuereinheiten sowie Speichereinheiten ausgerüstet werden, da deren Gewicht mit höherer Leistung zunimmt.

Aus der US 7,775,884 B1 ist ein Controller bekannt, der kabellos mit einer Spielekonsole verbunden werden kann. Der Controller weist ein Display auf, auf dem Ausgabedaten der Spielekonsole dargestellt werden können. Des Weiteren kann der Controller als gewöhnliches Mobiltelefon genutzt werden. Hierfür weist der Controller ein Tastenfeld auf. In einem Nachrichten-Modus können über das Tastenfeld Textnachrichten, wie z.B. E-mails oder SMS-Nachrichten, die dann auf dem Display dargestellt werden, eingegeben und verschickt werden.

Des Weiteren sind beispielsweise aus der EP 0 889 402 A2, US 2011/0213855 A1 oder US 2008/0307096 A1 Ein-/Ausgabegeräte bekannt, die eine Eingabevorrichtung, eine Ausgabevorrichtung und eine als Sende-/Empfangseinheit ausgebildete Schnittstelle umfassen. Über die Sende-/Empfangseinheit kann das Ein-/Ausgabegerät zum Datenaustausch mit zumindest einer externen Datenverarbeitungseinheit verbunden werden.

Aufgabe der vorliegenden Erfindung ist es somit, ein Ein-/Ausgabegerät sowie ein Kommunikationssystem zu schaffen, das zum mobilen Einsatz sehr leicht ist und zugleich eine sehr hohe Leistungsstärke aufweist.

Die Aufgabe wird gelöst durch ein Ein-/Ausgabegerät sowie ein Kommunikationssystem mit den Merkmalen der unabhängigen Patentansprüche.

Vorzugsweise besteht das Ein-/Ausgabegerät aus einer Energieeinheit zum mobilen Betreiben des Ein-/Ausgabegerätes, einer Eingabevorrichtung, einer Ausgabevorrichtung und einer Schnittstelle. Die Schnittstelle ist derart ausgebildet, dass sie die Eingabevorrichtung und die Ausgabevorrichtung, insbesondere getrennt voneinander, kabellos mit zumindest einer stationären oder mobilen Rechnereinheit und/oder einem Kommunikationsnetzwerk, insbesondere Intranet und/oder Internet, zu koppeln vermag. Zwischen der Eingabevorrichtung und der Ausgabevorrichtung besteht somit keine direkte Verbindung. Somit sind von der Rechnereinheit und/oder dem Kommunikationsnetzwerk an das Ein-/Ausgabegerät gesendete Daten in der Ausgabevorrichtung darstellbar und über die Eingabevorrichtung vom Benutzer eingegebene Befehle umgehend, ohne vom Ein-/Ausgabegerät verarbeitet zu werden, an die Rechnereinheit und/oder das Kommunikationsnetzwerk sendbar. Das Ein-/Ausgabegerät ist somit von der Rechnereinheit und/oder dem Kommunikationsnetzwerk entkoppelt. Das Ein-/Ausgabegerät weist keine Rechen-/Steuereinheit und Speichereinheit auf, so dass deren Gewicht stark reduziert ist. Diese schweren Komponenten sind stattdessen im Kommunikationsnetzwerk und/oder in der Rechnereinheit ausgelagert. Die Rechen- und Speicherleistung der Rechnereinheit und/oder des Kommunikationsnetzwerkes kann somit beliebig erhöht werden, ohne dass das Ein-/Ausgabegerät an Gewicht zunimmt und somit die mobile Verwendung dessen eingeschränkt wäre. Das Ein-/Ausgabegerät dient ausschließlich dem Darstellen und Eingeben von Informationen. Die eigentliche Verarbeitung und Speicherung dieser Informationen ist von dem Ein-/Ausgabegerät entkoppelt, wobei mittels der kabellosen Verbindung, insbesondere über Funk, Wireless-Lan, Bluetooth oder dergleichen, schnell und unmittelbar auf die Rechen-, Steuer- und Speicherkapazitäten zugegriffen werden kann.

Vorteilhaft ist es, wenn die Eingabevorrichtung und die Ausgabevorrichtung als eine Einheit ausgebildet sind, insbesondere als berührungsempfindliche, Bilddatenvisualisierbare und/oder flexible Oberfläche oder Folie. Hierdurch kann die Bedienerfreundlichkeit des Ein-/Ausgabegerätes verbessert werden, so dass der Benutzer Informationen intuitiv erfassen und eingeben kann.

Auch ist es vorteilhaft, wenn die Ausgabevorrichtung zum kurzzeitigen Puffern der von der Rechnereinheit zugesendeten Daten, insbesondere Bilddaten, einen schnellen Puffer-Speicher aufweist, so dass auch bei einem schlechten Netzempfang eine flüssige Informationsdarstellung gewährleistet ist.

Vorteilhaft ist es zudem, wenn die Energieeinheit einen Energiespeicher, insbesondere einen Akku, und/oder eine Energiequelle, insbesondere eine Solarzelle, umfasst. Hierdurch kann ein langer mobiler Betrieb des Ein-/Ausgabegerätes sichergestellt werden.

Ebenso ist es vorteilhaft, wenn zur einfachen und intuitiven Informationseingabe und Informationsausgabe die Eingabevorrichtung ein Mikrofon, zumindest eine Taste, ein Touchpad und/oder einen Touchscreen und/oder die Ausgabevorrichtung einen Lautsprecher und/oder ein Display umfasst. Vorteilhaft ist es, wenn die Ein-/Ausgabevorrichtung derart ausgebildet ist, dass sie sich beim Einschalten automatisch mit der Rechnereinheit und/oder dem Kommunikationsnetzwerk zu verbinden vermag, so dass ein unmittelbarer Zugriff auf die Rechner- und Speicherkapazitäten der Rechnereinheit und/oder des Kommunikationsnetzwerkes sichergestellt ist.

Auch ist es äußert vorteilhaft, wenn die Ein-/Ausgabevorrichtung ein Authentifizierungselement aufweist, auf dem Authentifizierungsinformationen hinterlegt sind, die vorzugsweise beim Einschalten des Ein-/Ausgabegerätes automatisch an die Rechnereinheit und/oder das Kommunikationsnetzwerk gesendet werden. Hierdurch kann vermieden werden, dass unautorisierte Nutzer auf die Rechnerkapazitäten und/oder in der Speichereinheit abgespeicherte Daten zugreifen können.

Vorteilhaft ist es, wenn die Rechnereinheit und/oder das Kommunikationsnetzwerk derart ausgebildet sind, dass sie die von der Eingabevorrichtung über die Schnittstelle zugesandten Befehle mit ihrer Rechen-/Steuereinheit zu verarbeiten und das Ergebnis in ihrer Speichereinheit zu speichern und/oder über die Schnittstelle an die Ausgabevorrichtung zurückzuschicken vermögen. Somit benötigt das Ein-/Ausgabegerät keine in diesem selbst angeordnete Rechen-/Steuereinheit und/oder Speichereinheit, so dass das Ein-/Ausgabegerät sehr leicht ausgebildet werden und zugleich auf die ausgelagerten hohen Rechen- und Speicherkapazitäten der Rechnereinheit und/oder des Kommunikationsnetzwerk zurückgreifen kann.

Vorteilhaft ist es, wenn die Rechnereinheit und/oder das Kommunikationsnetzwerk derart ausgebildet sind, dass sie beim Einschalten des Ein-/Ausgabegerätes eine Authentifizierungsüberprüfung durchzuführen und/oder, vorzugsweise bei Zugriffsberechtigung, das Ein-/Ausgabegerät mit der Rechnereinheit und/oder dem Kommunikationsnetzwerk, vorzugsweise automatisch, zu verbinden vermögen. Hierdurch kann sichergestellt werden, dass keine unautorisierten Nutzer auf die Rechnerkapazitäten und/oder in der Speichereinheit abgespeicherte Daten zugreifen können.

Vorteile bringt es mit sich, wenn in der Speichereinheit Authentifizierungsinformationen hinterlegt sind, die die Rechen-/Steuereinheit mit vom Benutzer in die Eingabevorrichtung eingegebenen und an die Rechnereinheit und/oder das Kommunikationsnetzwerk übermittelten oder, vorzugsweise automatisch, in einem Authentifizierungselement des Ein-/Ausgabegerätes hinterlegten Authentifizierungsinformationen abzugleichen vermag.

Weitere Vorteile der Erfindung sind in den nachfolgenden Ausführungsbeispielen beschrieben. Es zeigt:

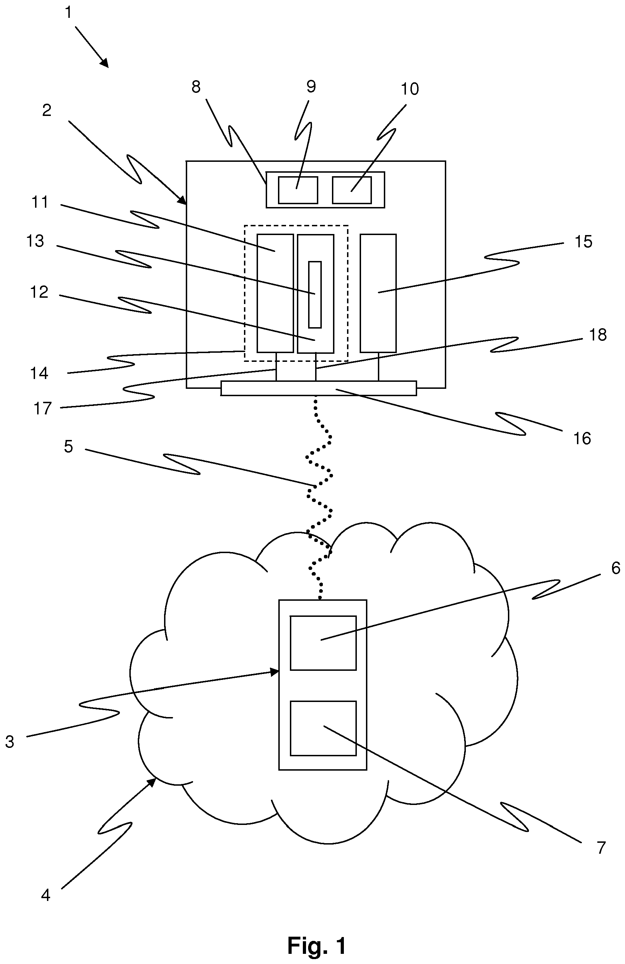

- **Figur 1**: eine schematische Darstellung eines Kommunikationssystems mit einem mobilen Ein-/Ausgabegerät, das kabellos mit einer Rechnereinheit eines Kommunikationsnetzwerkes verbunden ist.

Figur 1 zeigt eine schematische Darstellung eines Kommunikationssystems 1, das ein Ein-/Ausgabegerät 2 und eine Rechnereinheit 3, die in einem Kommunikationsnetzwerk 4 angeordnet ist, aufweist. Die Rechnereinheit 3 ist im vorliegenden Ausführungsbeispiel statisch ausgebildet. Sie umfasst zum langzeitigen Speichern von Daten eine Speichereinheit 6 und zur Informationsverarbeitung eine Rechen-/Steuereinheit 7. Das Kommunikationsnetzwerk 4 stellt im vorliegenden Ausführungsbeispiel das Internet dar, mit dem das Ein-/Ausgabegerät 2 über eine kabellose Verbindung 5 verbunden ist.

Das Ein-/Ausgabegerät 2 weist eine Energieeinheit 8 auf, so dass das Ein-/Ausgabegerät mobil betrieben werden kann. Die Energieeinheit 8 umfasst einen Energiespeicher 9, insbesondere einen Akku, der über eine hier nicht dargestellte Schnittstelle aufgeladen werden kann. Ferner umfasst die Energieeinheit 8 eine Energiequelle 10, die bspw. als Solarzelle ausgebildet ist, mittels derer Energie in den Energiespeicher 9 eingespeist werden kann.

Das Ein-/Ausgabegerät 2 weist eine Eingabevorrichtung 11 und eine Ausgabevorrichtung 12 auf. Mittels der Eingabevorrichtung 11 kann der Benutzer des Ein-/Ausgabegerätes 2 Befehle eingeben. Mittels der Ausgabevorrichtung 12 können Informationen, insbesondere Bildinformationen, ausgegeben werden. Die Ausgabevorrichtung 12 umfasst ferner optional einen schnellen Puffer-Speicher 13, der zur Bildstabilisierung verwendet wird. Die Eingabevorrichtung 11 und die Ausgabevorrichtung 12 sind zusammen als Einheit 14 ausgebildet. Die Einheit 14 ist vorzugsweise als berührungsempfindliches Display ausgebildet.

Das Ein-/Ausgabegerät 2 umfasst überdies hinaus ein Authentifizierungselement 15, auf dem Authentifizierungsinformationen gespeichert sind. Das Authentifizierungselement 15 muss jedoch nicht zwingend vorgesehen sein. So ist es in einem alternativen, hier nicht dargestellten Ausführungsbeispiel , ebenso denkbar, dass die Authentifizierungsinformationen, insbesondere ein Passwort, direkt über die Eingabevorrichtung 11 in das Ein-/Ausgabegerät 2 einzugeben werden, insbesondere wenn diese von der Rechnereinheit 3 angefordert werden.

Das Ein-/Ausgabegerät 2 umfasst ferner eine Schnittstelle 16. Die Eingabevorrichtung 11 ist mit der Schnittstelle 16 über einen Datenexportpfad 17 verbunden. Ferner ist die Ausgabevorrichtung 12 mit der Schnittstelle 16 über einen Datenimportpfad 18 verbunden. Der Datenexportpfad 17 und/oder der Datenimportpfad 18 sind unidirektional ausgebildet, d.h. dass eine Datenübertragung nur in eine Richtung erfolgen kann. Ferner sind die beiden Pfade 17, 18 voneinander entkoppelt. Innerhalb des Ein-/Ausgabegerätes 2 kann somit kein Datenaustausch zwischen der Eingabevorrichtung 11 und der Ausgabevorrichtung 12 erfolgen. Die Schnittstelle 16 ist derart ausgebildet, dass sie die Eingabevorrichtung 11 und die Ausgabevorrichtung 12 über die kabellose Verbindung 5 mit der externen Datenverarbeitungseinheit, insbesondere der Rechnereinheit 3, verbindet. Die Eingabevorrichtung 11 und die Ausgabevorrichtung 12 sind jeweils separat mit der Schnittstelle 16 verbunden. Somit können keine Informationen unmittelbar zwischen der Eingabevorrichtung 11 und der Ausgabevorrichtung 12 ausgetauscht und/oder von einer dieser beiden verarbeitet werden. Stattdessen kann das Ein-/Ausgabegerät 2 lediglich über die Eingabevorrichtung 11 Befehle des Benutzers entgegennehmen und diese an die Rechnereinheit 3 bzw. das Kommunikationsnetzwerk 4 weiterleiten oder von der Rechnereinheit 3 gesendete Informationen mittels der Ausgabevorrichtung 12 darstellen.

Vorteilhafterweise sind somit die schweren Elemente eines Computersystems, nämlich die Speichereinheit 6 und die Rechen-/Steuereinheit 7, von der Eingabevorrichtung 11 und der Ausgabevorrichtung 12 entkoppelt, so dass das Ein-/Ausgabegerät 2 sehr leicht ausgebildet werden kann. Ferner sind den Speicher- und Rechenkapazitäten des Systems keine Grenzen gesetzt, da die Rechnereinheit 3 an jedem beliebigen Ort, vorzugsweise stationär, aufgestellt sein kann und demnach eine beliebige Größe und ein beliebiges Gewicht aufweisen kann, ohne die Mobilität des Ein-/Ausgabegerätes einzuschränken.

Von der Rechnereinheit 3 und/oder dem Kommunikationsnetzwerk 4 an das Ein-/Ausgabegerät 2 gesendete Daten werden in der Ausgabevorrichtung 12 ausschließlich widergegeben. Über die Eingabevorrichtung 11 vom Benutzer eingebebene Befehle werden umgehend, ohne von dem Ein-/Ausgabegerät 2 verarbeitet zu werden, an die Rechnereinheit 3 bzw. das Kommunikationsnetzwerk 4 über die kabellose Verbindung 5 gesendet.

Die Rechnereinheit 3 ist derart ausgebildet, dass sie die von der Eingabevorrichtung 11 über die Schnittstelle 16 zugesandten Befehle mit ihrer Rechen-/Steuereinheit 7 zu verarbeiten vermag. Ferner kann die Rechnereinheit 3 bzw. das Kommunikationsnetzwerk 4 diese Befehlsinformationen oder aber auch die berechneten Ergebnisse in der Speichereinheit 6 speichern und/oder über die kabellose Verbindung 5 und die Schnittstelle 16 an die Ausgabevorrichtung 12 des Ein-/Ausgabegerätes 2 zurückschicken, wo diese Informationen dem Benutzer visuell, akustisch und/oder haptisch rückgemeldet werden.

Grundsätzlich kann das Kommunikationsnetzwerk 4 mehrere Rechnereinheiten 3 aufweisen, wobei zumindest eine dieser Rechnereinheiten 3 stets eingeschalten ist. Sobald der Benutzer das Ein-/Ausgabegerät 2 einschaltet, verbindet sich dieses automatisch über die Schnittstelle 16 mittels der kabellosen Verbindung 5 mit dem Kommunikationsnetzwerk 4 bzw. der eingeschalteten Rechnereinheit 3. Um den Zugriff von unautorisierten Personen auf die Rechnereinheit 3 vermeiden zu können, ist die Rechnereinheit 3 und/oder das Kommunikationsnetzwerk 4 derart ausgebildet, dass sie beim Einschalten des Ein-/Ausgabegerätes 2 eine Authentifizierungsüberprüfung durchführt. Hierfür sind auf der Rechnereinheit 3 Authentifizierungsinformationen des Benutzers, insbesondere in der Speichereinheit 6, hinterlegt. Alternativ können diese Authentifizierungsinformationen aber auch in einem sicheren Bereich der Rechnereinheit 3, insbesondere der Speichereinheit 6 gespeichert sein. Sobald das Ein-/Ausgabegerät 2 eingeschalten wird, sendet die Rechnereinheit 3 eine Berechtigungsanfrage an das Ein-/Ausgabegerät 2, wobei auf der Ausgabevorrichtung 12 die Aufforderung zur Eingabe von Authentifizierungsinformationen, insbesondere eines Passwortes, dargestellt wird. Der Benutzer kann nun über die Eingabevorrichtung 11 die erforderliche Authentifizierungsinformation eingeben, wobei diese Informationen über die Schnittstelle 16, ohne verarbeitet zu werden, über die kabellose Verbindung 5 an die Rechnereinheit 3 gesendet werden. Die Rechnereinheit 3 führt anschließend eine Authentifizierungsüberprüfung durch und erlaubt bei Berechtigungsverifikation den Zugriff des Ein-/Ausgabegerätes 2 auf die Rechnereinheit 3.

Alternativ kann aber auch das Ein-/Ausgabegerät 2 zusätzlich, wie in Figur 1 dargestellt, ein Authentifizierungselement 15 aufweisen, auf dem die individualisierten Authentifizierungsinformationen abgespeichert sind. Sobald das Ein-/Ausgabegerät 2 eingeschalten wird, baut die Rechnereinheit 3 und/oder das Kommunikationsnetzwerk 4 automatisch die kabellose Verbindung 5 mittels der Schnittstelle 16 des Ein-/Ausgabegerätes 2 auf. Hierbei liest die Rechnereinheit 3 automatisch die im Ein-/Ausgabegerät 2 hinterlegten Authentifizierungsinformationen aus dem Authentifizierungselement 15 aus. Die Rechnereinheit 3 vergleicht diese vom Ein-/Ausgabegerät 2 übersandten und/oder ausgelesenen Authentifizierungsinformationen mit den in der Speichereinheit 6 abgespeicherten Authentifizierungsinformationen. Wenn die Rechen-/Steuereinheit 7 zu einer Berechtigungsbestätigung gelangt, schaltet diese den vollen Zugriff des Ein-/Ausgabegerätes 2 auf die Rechnereinheit 3 frei. Der Benutzer kann somit auf sämtliche in der Speichereinheit 6 abgelegten Daten zugreifen sowie die Rechenkapazität der Rechen-/Steuereinheit 7 nutzen. Vorteilhafterweise kann der Benutzer somit auf eine sehr hohe Speicher- und Rechenleistung der stationären Rechnereinheit 3 zurückgreifen und besitzt zugleich aufgrund des im Wesentlichen auf die Eingabevorrichtung 11, Ausgabevorrichtung 12 und Schnittstelle 16 reduzierten Ein-/Ausgabegeräts 2 ein sehr leichtes mobiles Kommunikationsgerät.

Die vorliegende Erfindung ist nicht auf das dargestellte und beschriebene Ausführungsbeispiel beschränkt. Abwandlungen im Rahmen der Patentansprüche sind ebenso möglich wie eine Kombination der Merkmale, auch wenn sie in unterschiedlichen Ausführungsbeispielen dargestellt und beschrieben sind.

### Bezugszeichenliste

- 1: Kommunikationssystem
- 2: Ein-/Ausgabegerät
- 3: Rechnereinheit
- 4: Kommunikationsnetzwerk
- 5: kabellose Verbindung
- 6: Speichereinheit
- 7: Rechen-/Steuereinheit
- 8: Energieeinheit
- 9: Energiespeicher
- 10: Energiequelle
- 11: Eingabevorrichtung
- 12: Ausgabevorrichtung
- 13: Puffer-Speicher
- 14: Einheit
- 15: Authentifizierungselement
- 16: Schnittstelle
- 17: Datenexportpfad
- 18: Datenimportpfad

## Patentansprüche

1. Ein-/Ausgabegerät (2)
mit einer Energieeinheit (8) zum mobilen Betreiben des Ein-/Ausgabegerätes (2),
einer Eingabevorrichtung (11),
einer Ausgabevorrichtung (12) und
einer als Sende-/Empfangseinheit ausgebildeten Schnittstelle (16), mittels der das Ein-/Ausgabegerät (2) zum Datenaustausch kabellos mit zumindest einer externen Datenverarbeitungseinheit (3, 4) koppelbar ist, wobei die Eingabevorrichtung (11) zur Datenübermittlung an die Datenverarbeitungseinheit (3, 4) über einen Datenexportpfad (17) und die Ausgabevorrichtung (12) zum Datenempfang von der Datenverarbeitungseinheit (3, 4) über einen Datenimportpfad (18) mit der Schnittstelle (16) verbunden ist,
**dadurch gekennzeichnet,**
**dass** der Datenexportpfad (17) und der Datenimportpfad (18) voneinander entkoppelt sind,
so dass innerhalb des Ein-/Ausgabegerätes (2) kein Datenaustausch zwischen der Eingabevorrichtung (11) und der Ausgabevorrichtung (12) erfolgen kann und
vom Benutzer über die Eingabevorrichtung (11) eingegebene Eingabedaten umgehend, ohne vom Ein-/Ausgabegerät (2) verarbeitet zu werden, an die externe Datenverarbeitungseinheit (3, 4) sendbar sind und dass die von der externen Datenverarbeitungseinheit (3, 4) in Ausgabedaten verarbeiteten Eingabedaten umgehend, ohne vom Ein-/Ausgabegerät (2) verarbeitet zu werden, ausgebbar sind.

2. Ein-/Ausgabegerät nach dem vorherigen Anspruch, **dadurch gekennzeichnet, dass** die Eingabevorrichtung (11) und die Ausgabevorrichtung (12) als eine Einheit (14) ausgebildet sind, insbesondere als berührungsempfindliche, bilddatenvisualisierbare und/oder flexible Oberfläche oder Folie.

3. Ein-/Ausgabegerät nach einem oder mehreren der vorherigen Ansprüche, **dadurch gekennzeichnet, dass** die Ausgabevorrichtung (12) zum kurzzeitigen Puffern der von der Rechnereinheit (3) zugesendeten Daten, insbesondere Bilddaten, einen schnellen Puffer-Speicher (13) aufweist.

4. Ein-/Ausgabegerät nach einem oder mehreren der vorherigen Ansprüche, **dadurch gekennzeichnet, dass** die Energieeinheit (8) einen Energiespeicher (9), insbesondere einen Akku, und/oder eine Energiequelle (10), insbesondere eine Solarzelle, umfasst.

5. Ein-/Ausgabegerät nach einem oder mehreren der vorherigen Ansprüche, **dadurch gekennzeichnet, dass** die Eingabevorrichtung (11) ein Mikrofon, zumindest eine Taste, ein Touchpad und/oder einen Touchscreen und/oder die Ausgabevorrichtung (12) einen Lautsprecher und/oder ein Display umfasst.

6. Ein-/Ausgabegerät nach einem oder mehreren der vorherigen Ansprüche, **dadurch gekennzeichnet, dass** das Ein-/Ausgabegerät (2) derart ausgebildet ist, dass es sich beim Einschalten automatisch mit der Rechnereinheit (3) und/oder dem Kommunikationsnetzwerk (4) zu verbinden vermag.

7. Ein-/Ausgabegerät nach einem oder mehreren der vorherigen Ansprüche, **dadurch gekennzeichnet, dass** das Ein-/Ausgabegerät (2) ein Authentifizierungselement (15) aufweist, auf dem Authentifizierungsinformationen hinterlegt sind, die vorzugsweise beim Einschalten des Ein-/Ausgabegerätes (2) automatisch an die Rechnereinheit (3) und/oder das Kommunikationsnetzwerk (4) gesendet werden.

8. Kommunikationssystem (1)
mit einer Datenverarbeitungseinheit, insbesondere einer stationären oder mobilen Rechnereinheit (3) und/oder einem Kommunikationsnetzwerk (4), insbesondere Intranet und/oder Internet,
die zum langzeitigen Speichern von Daten eine Speichereinheit (6) und
zur Informationsverarbeitung eine Rechen-/Steuereinheit (7) aufweisen, und
mit einem mobilen Ein-/Ausgabegerät (2),
**dadurch gekennzeichnet, dass**
das Ein-/Ausgabegerät (2) gemäß einem oder mehreren der vorherigen Ansprüche ausgebildet ist.

9. Kommunikationssystem nach dem vorherigen Anspruch, **dadurch gekennzeichnet, dass** die Rechnereinheit (3) und/oder das Kommunikationsnetzwerk (4) derart ausgebildet sind, dass sie die von der Eingabevorrichtung (11) über die Schnittstelle (16) zugesandten Befehle mit ihrer Rechen-/Steuereinheit (7) zu verarbeiten und das Ergebnis in ihrer Speichereinheit (6) zu speichern und/oder über die Schnittstelle (16) an die Ausgabevorrichtung (12) zurückzuschicken vermögen.

10. Kommunikationssystem nach einem oder mehreren der vorherigen Ansprüche, **dadurch gekennzeichnet, dass** die Rechnereinheit (3) und/oder das Kommunikationsnetzwerk (4) derart ausgebildet sind, dass sie beim Einschalten des Ein-/Ausgabegerätes (2) eine Authentifizierungsüberprüfung durchzuführen und, vorzugsweise bei Zugriffsberechtigung, das Ein-/Ausgabegerät (2) mit der Rechnereinheit (3) und/oder dem Kommunikationsnetzwerk (4) automatisch zu verbinden vermögen.

11. Kommunikationssystem nach einem oder mehreren der vorherigen Ansprüche, **dadurch gekennzeichnet, dass** in der Speichereinheit (6) Authentifizierungsinformationen hinterlegt sind, die die Rechen-/Steuereinheit (7) mit vom Benutzer in die Eingabevorrichtung (11) eingegebenen und an die Rechnereinheit (3) und/oder das Kommunikationsnetzwerk (4) übermittelten oder in einem Authentifizierungselement (15) des Ein-/Ausgabegerätes (2) hinterlegten Authentifizierungsinformationen abzugleichen vermag.

## Claims

1. I/O device (2)
with an energy unit (8) for the mobile operation of the I/O device (2), an input device (11),
an output device (12), and
an interface (16) executed as a transmitting/receiving unit, by means of which the I/O device (2) can becoupled wirelessly to at least one external data processing unit (3, 4) for exchangingdata the input device (11) is connected to the interface (16), for transmitting data to the data processing unit (3, 4) via a data export path (17) and the output device (12), for receiving data from the data processing unit (3, 4) via a data import path (18),
**characterized in that**
the data export path (17) and the data import path (18) are uncoupled from one another, so that no data exchange can take place between the input device (11) and the output device (12) within the I/O device (2) and data entered by a user via the input device (11) can be sent directly, without processing by the I/O device (2), to the external data processing unit (3, 4)
and that the data entered processed by the external data processing unit (3, 4) to output data can be output immediately without needing processing by the I/O device (2).

2. I/O device according to the preceding claim, **characterized in that** the input device (11) and the output device (12) are executed as one single unit (14), especially as touch-sensitive flexible surface and/or foil that can visualize pictorial data.

3. I/O device according to one or several of the preceding claims,
**characterized in that** the output device (12) for short-term buffering of the data, especially pictorial data, sent by the computational unit (3), has a fast buffer storage (13).

4. I/O device according to one or several of the preceding claims,
**characterized in that** the energy unit (8) comprises an energy storage unit (9), especially an accumulator, and/or an energy source (10), especially a solar cell.

5. I/O device according to one or several of the preceding claims,
**characterized in that** the input device (11) comprises a microphone, at least one key, a touchpad and/or a touch screen and/or the output device (12) comprise a loudspeaker and/or a display.

6. I/O device according to one or several of the preceding claims,
**characterized in that** the I/O device (2) is executed in such a way that when it is turned on is capable of communicating automatically with the computational unit (3) and/or the communication network (4).

7. I/O device according to one or several of the preceding claims,
**characterized in that** the I/O device (2) has an authentication element (15) on which authentication information has been stored that is sent automatically to the computational unit (3) and/or the communication network (4) preferably when the I/O device (2) is turned on.

8. Communication system (1)
with a data processing unit, especially a stationary or mobile computational unit (3) and/or a communication network (4), especially Intranet and/or Internet,
that has a storage unit (6) for long-term data storage and comprising a computational/control unit (7) for information processing and
with a mobile I/O device (2),
**characterized in that**
the I/O device (2) is executed according to one or several of the preceding claims.

9. Communication system according to the previous claim,
**characterized in that** the computational unit (3) and/or the communication network (4) are executed in such a way that they are capable of processing the commands sent by the input device (11) via the interface (16) with their computational/control unit (7) and of storing the result in their storage unit (6) and/or of sending it back to the output device (12) via the interface (16).

10. Communication system according to one or several of the preceding claims, **characterized in that** the computational unit (3) and/or the communication network (4) are executed in such a way that when the I/O device (2) is turned on, they are capable to carry out an authentication check and, preferably when access is authorized, to connect the I/O device (2) automatically to the computational unit (3) and/or the communication network (4).

11. Communication system according to one or several of the preceding claims, **characterized in that** authentication information is stored in the storage unit (6) and the computational/control unit (7) can compare it with the authentication information entered by the user into the input device (11) and transmitted to the computational unit (3) and/or communication network (4), or stored in an authentication element (15) of the I/O device (2).

## Revendications

1. Appareil d'entrée/sortie (2)
avec une unité d'énergie (8) pour l'utilisation mobile de l'appareil d'entrée/sortie (2),
un dispositif d'entrée (11)
un dispositif de sortie (12) et
une interface (16) se présentant sous la forme d'une unité d'émission/de réception, au moyen de laquelle l'appareil d'entrée/sortie (2) peut être couplé sans fil à au moins une unité de traitement de données externe (3, 4) pour échanger des données,
dans lequel le dispositif d'entrée (11), pour transmettre des données à l'unité de traitement de données (3, 4), est connecté à l'interface (16) via un chemin d'exportation de données (17) et le dispositif de sortie (12), pour recevoir des données de l'unité de traitement de données (3, 4), est connecté à l'interface (16) via un chemin d'importation de données (18),
**caractérisé en ce que** le chemin d'exportation de données (17) et le chemin d'importation de données (18) sont découplés l'un de l'autre,
de sorte qu'aucun échange de données ne puisse avoir lieu au sein de l'appareil d'entrée/sortie (2) entre le dispositif d'entrée (11) et le dispositif de sortie (12) et
que les données d'entrée saisies par l'utilisateur via le dispositif d'entrée (11) puissent être envoyées immédiatement à l'unité de traitement de données externe (3, 4), sans être traitées par l'appareil d'entrée/sortie (2), et que les données d'entrée traitées en données de sortie par l'unité de traitement de données externe (3, 4) puissent être sorties immédiatement, sans être traitées par l'appareil d'entrée/sortie (2).

2. Appareil d'entrée/sortie selon la revendication précédente, **caractérisé en ce que** le dispositif d'entrée (11) et le dispositif de sortie (12) se présentent sous la forme d'une unité (14), en particulier sous forme de surface ou de feuille sensible au toucher, capable de visualiser des données d'images et/ou flexible.

3. Appareil d'entrée/sortie selon l'une ou plusieurs des revendications précédentes, **caractérisé en ce que** le dispositif de sortie (12) présente une mémoire tampon (13) rapide pour mettre brièvement en mémoire tampon les données, en particulier les données d'images, envoyées par l'unité de calcul (3).

4. Appareil d'entrée/sortie selon l'une ou plusieurs des revendications précédentes, **caractérisé en ce que** l'unité d'énergie (8) comporte un stockage d'énergie (9), en particulier un accumulateur, et/ou une source d'énergie (10), en particulier une cellule photovoltaïque.

5. Appareil d'entrée/sortie selon l'une ou plusieurs des revendications précédentes, **caractérisé en ce que** le dispositif d'entrée (11) comprend un microphone, au moins une touche, un pavé tactile et/ou un écran tactile et/ou le dispositif de sortie (12) comprend un haut-parleur et/ou un écran.

6. Appareil d'entrée/sortie selon l'une ou plusieurs des revendications précédentes, **caractérisé en ce que** l'appareil d'entrée/sortie (2) se présente sous une forme telle qu'il puisse se connecter automatiquement à l'unité de calcul (3) et/ou au réseau de communication (4) lorsqu'il est mis en marche.

7. Appareil d'entrée/sortie selon l'une ou plusieurs des revendications précédentes, **caractérisé en ce que** l'appareil d'entrée/sortie (2) présente un élément d'authentification (15) sur lequel sont mémorisées des informations d'authentification qui sont envoyées automatiquement à l'unité de calcul (3) et/ou au réseau de communication (4) de préférence lorsque l'appareil d'entrée/sortie (2) est mis en marche.

8. Système de communication (1)
avec une unité de traitement de données, en particulier une unité de calcul (3) stationnaire ou mobile et/ou un réseau de communication (4), en particulier Intranet et/ou Internet, qui comportent une unité de mémoire (6) pour le stockage à long terme de données et comportent une unité de calcul/commande (7) pour le traitement d'informations,
et
avec un appareil d'entrée/sortie(2) mobile,
**caractérisé en ce que**
l'appareil d'entrée/sortie (2) se présente sous une forme selon l'une ou plusieurs des revendications précédentes.

9. Système de communication selon la revendication précédente, **caractérisé en ce que** l'unité de calcul (3) et/ou le réseau de communication (4) se présentent sous une forme telle qu'ils soient capables de traiter les instructions envoyées par le dispositif d'entrée (11) via l'interface (16) avec leur unité de calcul/commande (7) et de mémoriser le résultat dans leur unité de mémoire (6) et/ou de le renvoyer au dispositif de sortie (12) via l'interface (16).

10. Système de communication selon l'une ou plusieurs des revendications précédentes, **caractérisé en ce que** l'unité de calcul (3) et/ou le réseau de communication (4) se présentent sous une forme telle qu'ils soient capables, lorsque l'appareil d'entrée/sortie (2) est mis en marche, d'effectuer un contrôle d'authentification et, de préférence en cas autorisation d'accès, de connecter automatiquement l'appareil d'entrée/sortie (2) à l'unité de calcul (3) et/ou le réseau de communication (4).

11. Système de communication selon l'une ou plusieurs des revendications précédentes, **caractérisé en ce que** des informations d'authentification sont mémorisées dans l'unité de mémoire (6), que l'unité de calcul/commande (7) est capable de comparer avec des informations d'authentification saisies par l'utilisateur dans le dispositif d'entrée (11) et transmises à l'unité de calcul (3) et/ou le réseau de communication (4) ou mémorisées dans un élément d'authentification (15) de l'appareil d'entrée/sortie (2).
